# EUROPÄISCHE PATENTSCHRIFT

(11) **EP 0 360 891 B1**
(45) Veröffentlichungstag und Bekanntmachung des Hinweises auf die Patenterteilung: **02.03.1994**
(21) Anmeldenummer: 88115900.8
(22) Anmeldetag: 27.09.1988
(51) Int. Cl.: H04M 3/42, H04M 3/54

(54) **Verfahren zur Übernahme von Anrufen**
Call coverage method
Procédé d'interception des appels

(43) Veröffentlichungstag der Anmeldung: 04.04.1990
(73) Patentinhaber: SIEMENS AKTIENGESELLSCHAFT, 80333 München (DE)
(72) Erfinder: von Ow, Hans Peter, Dr. Ing., D-8000 München 71 (DE); Speitkamp, Burkhard, D-8000 München 71 (DE)

(56) Entgegenhaltungen:
- EP-A- 0 257 672
- WO-A-79/00250
- PHILIPS TELECOMMUNICATION REVIEW, Band 40, Nr. 4, Dezember 1982, Seiten 327-336, Hilversum, NL; F.L. JANSEN: "KT20 multi-function telephone terminals"

## Beschreibung

Die Erfindung betrifft ein Verfahren zur Übernahme von Anrufen durch Dritte für ein modular strukturiertes digitales Kommunikationssystem mit einer Anzahl von unterschiedlichen Endgeräten und mit einer alle Vermittlungsfunktionen durchführenden zentralen Steuerungseinrichtung, die Zugriff zu Speicheranordnungen hat, in denen alle zur Durchführung der Vermittlungsfunktionen notwendigen Informationen abgespeichert sind, wobei von einer Teilnehmerstelle jeweils bestimmte, den Aufbau einer Verbindung betreffende Leistungsmerkmale einleitbar sind.

Ein modular strukturiertes digitales Kommunikationssystem ist Z.B. durch die Sonderausgabe "telcom report und Siemens-Magazin COM-ISDN im Büro - 1985" bekannt. An ein derartiges Kommunikationssystem sind Fernsprechendgeräte der unterschiedlichsten Art, Fernkopierer, multifunktionale Terminals, Teletex- und Bildschirmtextstationen, usw. anschließbar. Die digitalen Fernsprechendgeräte bieten mit einer Vielzahl von Programm- bzw. Funktionstasten vielfältige Bedienungshilfen.

Bei diesem bekannten Kommunikationssystem kann jeder Nebenstellenteilnehmer in maximal einer Anrufübernahmegruppe sein. Ankommende Anrufe werden bei allen Teilnehmern dieser Gruppe parallel signalisiert und können von jedem dieser Teilnehmer übernommen werden.

Ein derartiges System ist auch aus der EP-A-0 257 672 zu entnehmen Eine Vorzimmeranlage des aus dem erstgenannten Dokument bekannten Kommunikationssystems kann maximal vier Chef- und zwei Sekretär-Terminals umfassen. Anrufe für die Chefs kommen immer zur Erst-Sekretärin und werden beim Chef und der Zweit-Sekretärin parallel signalisiert.

Die Chef- und die Sekretär-Terminals einer Vorzimmeranlage können zusätzlich in je einer Anrufübernahmegruppe sein, allerdings mit der folgenden Einschränkung, daß Chef- und zugehöriger Sekretär-Terminal nicht gemeinsam in derselben Anrufübernahmegruppe sind, da dies zu Problemen bei der Signalisierung und bei der Verwaltung der Anrufe führen würde.

Aufgrund dieser Konfiguration ergibt sich der Nachteil, daß unter Umständen in bestimmten Situationen eine Übernahme von Anrufen nicht möglich ist, so z.B. durch die Sekretärin oder von einem anderen Chefapparat aus, wenn bei einem Chef gerufen wird (nach Vermitteln, Direktruf) oder von einem Chefapparat aus, wenn bei der Sekretärin gerufen wird (persönlicher Anruf oder Anruf für einen anderen Chef).

Der Nachteil dieser Lösung ist also die Einschränkung der Möglichkeit zur Übernahme von Anrufen. Aufgabe der vorliegenden Erfindung ist es, diese Möglichkeit auf möglichst einfache Weise zu schaffen.

Diese Aufgabe wird erfindungsgemäß für ein Verfahren der eingangs genannten Art dadurch gelöst, daß alle Anrufe für eine Ziel-Teilnehmerstelle X gleichzeitig bei allen Teilnehmerstellen mit einer Direktruftaste mit dem Ziel "Teilnehmerstelle X" signalisiert werden, und daß von jeder dieser Teilnehmerstellen durch Abheben des Hörers und Betätigen der Direktruftaste, bzw. durch Beätigen der Direktruftaste im Ruhezustand und nach einer anlageninternen Prüfung des Rufzustandes der Ziel-Teilnehmerstelle X, der Anruf übernehmbar ist.

Durch das Zurückgreifen auf die vorhandenen Direktruftasten, die bei Teilnehmerstellen von digitalen Kommunikationssystemen üblich sind, ergibt sich ein sehr geringer Eingriff in die bestehende Software, wodurch der erforderliche zusätzliche Testaufwand kleingehalten wird. Ein weiterer Vorteil ist, daß es nur zu wenigen Querbeziehungen zu anderen Leistungsmerkmalen bei Durchführung des erfindungsgemäßen Verfahrens kommt.

Eine zweckmäßige Ausgestaltung des erfindungsgemäßen Verfahrens ist dadurch gekennzeichnet, daß die Signalisierung der Anrufe für die Teilnehmerstelle X bei den anderen Teilnehmerstellen durch Blinken einer in der jeweiligen Direktruftaste befindlichen LED-Anzeige erfolgt. Durch die zustäzliche Ausnutzung der schon vorhandenen LED-Anzeige ist kein äußerer Eingriff in das jeweilige Endgerät notwendig.

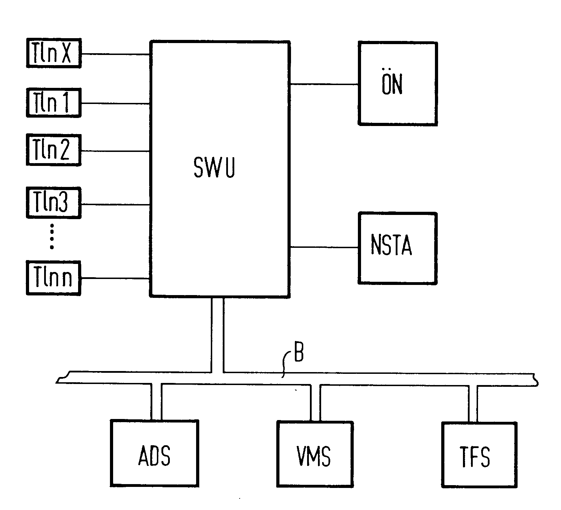

Das erfindungsgemäße Verfahren wird nachfolgend anhand eines in der Zeichnung prinzipiell dargestellten digitalen Kommunikationssystems näher erläutert.

In der Figur ist der prinzipielle Aufbau eines modular strukturierten digitalen Kommunikationssystems dargestellt. Ein wesentlicher Bestandteil des dargestellten Kommunikationssystems ist ein ein digitales Koppelnetz und eine zentrale Steuerungseinrichtung aufweisendes Durchschaltemodul SWU, an welches neben dem öffentlichen Fernsprechnetz ÖN und privaten Fernsprechnetzen NSTA unterschiedliche Kommunikationsendgeräte TlnX, und Tln1 bis Tlnn, wie z.B. Teletex- und Bildschirmtextstationen, Datenendgeräte, multifunktionale Terminals, Fernkopierer, usw. wie auch digitale Fernsprechendgeräte und analoge Fernsprechendgeräte angeschlossen sind.

Das Durchschaltemodul SWU ist über ein Bussystem B mit einem Betriebs- und Datenmodul ADS sowie den Programmsteuermodulen VMS und DFS verbunden. Das Betriebs- und Datenmodul ADS dient der Steuerung der systemtechnischen Peripherie sowie der Speicherung von Systemdateien.

Für Module, welche wie das Betriebs- und Datenmodul mit individueller Programmsteuerung jeweils spezifische Aufgaben erfüllen, hat sich auch der Begriff "Server" durchgesetzt. Die einzelnen "Server" bestehen jeweils aus peripheren und zentralen Baugruppen, die zum Teil über eigene Mikroprozessoren verfügen. Der Aufbau und die Aufgaben der einzelnen "Server" ist zum Verständnis der vorliegenden Erfindung nicht wesentlich und wird daher im folgenden nur kurz erläutert. So dient der Sprachinformationsserver VMS dazu, Nachrichten in einem empfängerzugeordneten Postfach des "Servers" zu hinterlegen, wobei der Empfänger die Nachrichten von einem beliebig geeigneten Terminal jederzeit abrufen kann. Der Text- und Fax-Server TFS ermöglicht den Nachrichtenaustausch zwischen Endgeräten, die technisch nicht kompatibel sind.

Erfindungsgemäß sind an das dargestellte Kommunikationssystem nun digitale Fernsprechendgeräte angeschlossen. Hierzu ist einleitend zu sagen, daß das erfindungsgemäße Verfahren nicht nur auf Fernsprechendgeräte anwendbar ist. Zur Einleitung von Leistungsmerkmalen beliebiger Art verfügen die digitalen Fernsprechendgeräte über Programm- bzw. Funktionstasten, wodurch deren Benutzer eine erhebliche Bedienungshilfe geboten wird. So verfügen diese Fernsprechendgeräte unter anderem über Direktruftasten. Im folgenden soll im wesentlichen nur auf diese Direktruftasten eingegangen werden, da nur diese erfindungswesentlich sind. Zu jeder Direktruftaste gehört ein Ziel X. Durch Betätigen der Direktruftaste im Ruhezustand wird eine Verbindung zu der Ziel-Teilnehmerstelle X aufgebaut. In der Direktruftaste befindet sich eine LED-Anzeige, mit welcher normalerweise der Zustand der Ziel-Teilnehmerstelle angezeigt wird. So bedeuten im Normalfall eine nichtleuchtende LED-Anzeige, daß die Ziel-Teilnehmerstelle frei ist und eine leuchtende LED-Anzeige, daß die Ziel-Teilnehmerstelle belegt ist.

Bei dem erfindungsgemäßen Verfahren kommt noch der dritte Zustand hinzu, daß die LED-Anzeige blinkt. Die blinkende LED-Anzeige in einer Direktruftaste zeigt dem betreffenden Teilnehmer an, daß bei dem jeweils gekennzeichneten Direktrufteilnehmer ein Anruf vorliegt. Er kann sich nun entscheiden diesen Anruf zu übernehmen. Dabei kann der Anruf durch Drücken der blinkenden Direktruftaste entweder im Ruhezustand, falls eine Freisprecheinrichtung vorhanden ist, bzw. nach Abheben im Wahlaufnahmezustand, übernommen werden. Gesprächsbegleitend ist die Übernahme eines so signalisierten Anrufs nicht möglich. Im Gesprächszustand kann wie bisher durch Drücken der Direktruftaste und Einhängen ein Anruf zum Direktrufziel übergeben werden.

Der Anruf wird bei blinkender LED-Anzeige auf einem vorhandenen Display nicht signalisiert, da diese Anzeige überflüssig ist, da durch die Beschriftung der blinkenden Taste eindeutig ist, welcher Teilnehmer gerufen wird. Nach Einleitung der Anrufübernahme prüft die Anlage, ob bei der Ziel-Teilnehmerstelle gerufen wird. Darauf erfolgt die Übernahme des Anrufes.

Diese Übernahmemöglichkeit ist nicht auf Vorzimmeranlagen beschränkt. Damit können auch Vertretungs-Sekretärinnen in anderen Vorzimmer-Anlagen, sowie jede beliebige Teilnehmerstelle Anrufe übernehmen. Da die Direktrufziele vom Teilnehmer selbst programmiert werden können, kann er die Übernahmemöglichkeit selber kurzfristig ohne Einschaltung der Betriebstechnik oder des Wartungsdienstes ändern. Die Übernahmemöglichkeit gemäß des erfindungsgemäßen Verfahrens ist völlig unabhängig von den Anrufübernahmegruppen, d.h. ein Teilnehmer kann Anrufe aus den unterschiedlichsten Anrufübernahmegruppen übernehmen. So kann z.B. ein Anruf für die Teilnehmerstelle TlnX von jeder der Teilnehmerstellen Tln1 bis Tlnn übernommen werden, egal welcher Anrufübernahmegruppe sie jeweils angehört.

## Patentansprüche

1. Verfahren zur Übernahme von Anrufen durch Dritte für ein modular strukturiertes digitales Kommunikationssystem mit einer Anzahl von unterschiedlichen Endgeräten und mit einer alle Vermittlungsfunktionen durchführenden zentralen Steuerungseinrichtung, die Zugriff zu Speicheranordnung hat, in denen alle, zur Durchführung der Vermittlungsfunktionen notwendigen Informationen abgespeichert sind, wobei von einer Teilnehmerstelle jeweils bestimmte, den Aufbau einer Verbindung betreffende Leistungsmerkmale einleitbar sind,
**dadurch gekennzeichnet,**
daß alle Anrufe für eine Ziel-Teilnehmerstelle X (TlnX) gleichzeitig bei allen Teilnehmerstellen mit einer Direktruftaste mit dem Ziel "Teilnehmerstelle X" (z.B. Tln1) signalisiert werden, und daß von jeder dieser Teilnehmerstellen durch Abheben des Hörers und Betätigen der Direktruftaste, bzw. durch Betätigen der Direktruftaste im Ruhezustand und nach einer anlageninternen Prüfung des Rufzustands der Ziel-Teilnehmerstelle X, der Anruf übernehmbar ist.

2. Verfahren nach Anspruch 1,
**dadurch gekennzeichnet,**
daß die Signalisierung der Anrufe für die Teilnehmerstelle X (TlnX) bei den anderen Teilnehmerstellen (z.B. Tln1) durch Blinken einer in der jeweiligen Direktruftaste befindlichen LED-Anzeige erfolgt.

## Claims

1. Method for call coverage by third parties for a modularly structured digital communications system with a number of different terminals and with a central processor which executes all switching functions and which has access to a memory arrangement in which all information items necessary for executing the switching functions are stored, a subscriber station in each case being capable of initiating certain user facilities relating to the setting-up of a connection, characterized in that all calls for a destination subscriber station X (TlnX) are simultaneously signalled at all subscriber stations with a direct call key with the destination "subscriber station X" (e.g. Tln1), and in that the call can be covered by each of these subscriber stations by taking the receiver off hook and operating the direct call key or by operating the direct call key in the idle state and after a system-internal testing of the call state of the destination subscriber station X.

2. Method according to Claim 1, characterized in that the calls for the subscriber station X (TlnX) are signalled at the other subscriber stations (e.g. Tln1) by flashing of an LED indicator located in the respective direct call key.

## Revendications

1. Procédé d'interception d'appel par des tiers, destiné à un système de communication numérique présentant une configuration modulaire, comportant un certain nombre d'appareils terminaux différents ainsi qu'un dispositif de commande central exécutant toutes les fonctions de commutation, ayant accès à un dispositif de mémoire, dans lequel sont mises en mémoire toutes les informations nécessaires à l'exécution des fonctions de commutation, des caractéristiques, déterminées dans chaque cas, de prestations concernant l'établissement d'une communication pouvant être introduites à partir d'un poste d'utilisateur,
caractérisé par le fait que
tous les appels destinés à un poste X destinataire (TlnX) font l'objet d'un signal simultanément sur tous les postes d'utilisateurs, au moyen d'une touche d'appel direct comportant l'indication de destinataire "poste X d'utilisateur" (par exemple Tln1) et par le fait que l'appel peut être intercepté par chacun de ces postes d'utilisateurs en soulevant l'écouteur et en actionnant la touche d'appel direct, ou en actionnant la touche d'appel direct, à l'état de repos, et après une vérification, qui s'effectue dans l'installation elle-même, de la situation d'appel du poste X d'utilisateur destinataire.

2. Procédé selon la revendication 1,
caractérisé par le fait que
la signalisation des appels destinés au poste X d'utilisateur (TlnX) s'effectue sur les autres postes d'utilisateurs (par exemple Tln1), grâce au clignotement d'un affichage par diode électroluminescente qui se trouve dans la touche d'appel direct considérée.
